Europäisches Patentamt

European Patent Office

Office européen des brevets

(11) Publication number: **0 468 450 A2**

# EUROPEAN PATENT APPLICATION

(21) Application number: **91112334.7**

(22) Date of filing: **23.07.91**

(51) Int. Cl.5: **H04N 11/00**

(30) Priority: **27.07.90 US 558536**

(43) Date of publication of application:
**29.01.92 Bulletin 92/05**

(84) Designated Contracting States:
**DE FR IT NL**

(71) Applicant: **INTERNATIONAL TELECOMMUNICATIONS SATELLITE ORGANIZATION**
**3400 International Drive, N.W.**
**Washington, D.C. 20008(US)**

(72) Inventor: **Sinha, Ashok K.**
**17220 Vestry Court**
**Rockville, MD 20855(US)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) Parametric reduction technique for enhanced bit rate reduction of color video signals.

(57) An apparatus and method for enhanced bit rate reduction of color video signals which provide for converting each selected picture element of the color video signal into its characterizing luminance and wavelength parameters through a series of transformations, and transmitting only the luminance and wavelength parameters over the transmission channel. Inverse transformations are utilized to reconstruct the color video signal on the receive side of the transmission channel. The apparatus and method make it possible to reduce the bit rate, power and/or bandwidth requirements for or increase the quality of color video signal transmissions.

FIG.2

EP 0 468 450 A2

## BACKGROUND OF THE INVENTION

Efficient utilization of the transmission channel is an important consideration in the transmission of TV and other color video signals due to the relatively large bit-rate and bandwidth requirements. This is particularly true for satellite transmissions either in the contribution, distribution or broadcast mode, due to the inherent and practical limitations on the space segment power and bandwidth, and hence capacity. In view of the increasing demand for TV services, a number of bit-compression (i.e. bit rate reduction) techniques have been developed and utilized to permit an increased number of TV signals to be transmitted over the available transmission channels. Examples of conventional bit rate reduction techniques include the Adaptive Predictive Coding Methods based on differential pulse code modulation (DPCM), Discrete Cosine Transform (DCT), and Hybrid Transform Coding with or without Motion Compensation Techniques (MCT). See K. Kinuhata, P. Nuspl, A. Kwan, H. Yamamoto, H. Murakami and S. Matsumoto, "Universal Digital TV Codec - UNICODEC", Proceedings 7th. International Conference on Digital Satellite Communications (ICDSC-7), Munich, Federal Republic of Germany, May 12-16, 1986, pp. 281-287; CCIR Rep. 1089, "Bit Rate Reduction for Digital Television Signals", Vol. XI, Dubrovnik, 1986; H. Buley and L. Stenger, "Inter/Intraframe Coding of Color TV Signals for Transmission at the Third Level of the Digital Hierarchy", Proceedings of the IEEE, Vol. 73, No. 4, April 1985, pp. 765-772; Ph. Dalleur and P. Delogne, "Simple Techniques for Reducing Transmitted Bit Rates in Digital Television", European Broadcasting Union (EBU) Rev. Tech., 203, February 1984, pp. 2-12; Y. Ninomiya and Y. Ohtsuka, "A Motion-Compensated Interframe Coding Scheme for Television Pictures", IEEE Trans. Commun. Vol. COM-30, 1, January 1982, pp. 201-211.

Conventional color video signal processing entails the sampling of three signal parameters corresponding to the "gamma corrected" normalized color component values derived from the three primary color component values (i.e. red, green, and blue) for a given picture element (i.e. pel), since all colors can be regarded as mixtures of these three primary color components. See J.O. Limb, C.B. Rubinstein and J.E. Thompson, "Digital Coding of Color Video Signals - A Review", IEEE Trans. Commun., Vol. COM-25, November 1977, pp. 1349-1384. With the transmission of 8 bits for each signal parameter, the transmission of 24 (i.e. 8x3) bits per sampled pel is required. Conventionally, the signal is transmitted either in composite format or in component format. See CCIR Rec. 601, "Encoding Parameters of Digital Television for Studios", Vol. XI, Dubrovnik, 1986; CCIR Rec. 604-1, "Digital Television Transmission - General Principles", Vol. XII, Dubrovnik, 1986; CCIR Rep. 646-3, "Digital or Mixed Analogue-and-Digital Transmission of Television Signals", Vol. XII, Dubrovnik, 1986; CCIR Rep. 629-2, "Digital Coding of Color Television Signals", Vol. XI, Dubrovnik, 1986. For analog transmissions requiring interconversions between different television standards (e.g. PAL, NTSC, SECAM, etc) and for digital transmissions, component coding, wherein the selected signal parameters are sampled independently and used to separately modulate the transmission carrier, is a more convenient choice. In contrast, for analog transmissions not requiring interconversions a composite signal is typically sampled and used to modulate the transmission carrier. Generally, instead of transmitting the three primary color component values, it is beneficial, and hence conventional, to transmit the total intensity (i.e. luminance) value and the two color difference (i.e. chrominance) values. This allows direct compatibility with the monochrome system and less sensitivity to errors in the measurement of the individual color component values.

If the number of signal parameters required to be transmitted to define the state of each sampled pel could be reduced, the overall bit-rate of a color video signal transmission channel could be reduced. Hence, the total number of color video signals transmitted over the available transmission facilities or the quality of the color video signals transmitted over the available transmission facilities could be increased.

It is therefore an object of the present invention to provide a technique which will allow color video signals to be transmitted using less than 24 bits per sampled pel.

It is a further object of the present invention to provide a technique which will allow color video signals to be transmitted using less than three signal parameters per sampled pel.

It is a further object of the present invention to provide a technique which will allow a larger number of color video signals to be transmitted over the available transmission facilities without loss of quality.

It is a further object of the present invention to provide a technique which will allow color video signals to be transmitted using less of the capacity of the available transmission facilities thereby allowing additional capacity for transmission of video, text, data and other types of communications.

It is a still further object of the present invention to provide a technique which will allow color video signals of improved quality to be transmitted over the available transmission facilities.

## SUMMARY OF THE INVENTION

The above and other objects of the present invention are achieved by transforming the primary color component values for each sampled picture element of a color video signal into the corresponding unique luminance and wavelength values, transmitting only the unique luminance and wavelength values over the transmission channel and reconstructing the color video signal from the transmitted luminance and wavelength values at the receive side of the transmission channel.

BRIEF DESCRIPTION OF THE DRAWINGS

The invention will be more clearly understood from the following description in conjunction with the accompanying drawings, wherein:

Fig. 1 illustrates a graph of the normalized tristimulus values x, y and z of spectral stimuli of equal radiance for the standard observer corresponding to the three primary color component values plotted against wavelength.

Fig. 2 illustrates a block diagram of a color video signal processing system in accordance with the present invention.

Fig. 3 is a flow chart diagram depicting a logical sequence which could be used in the chroma processor and modulator shown in Figure 2.

Fig. 4 is a flow chart diagram depicting a logical sequence which could be used in the normalizer shown in Figure 2.

Fig. 5 is a flow chart diagram depicting a logical sequence which could be used in the data comparator shown in Figure 2.

DETAILED DESCRIPTION OF THE INVENTION

There exists an inherent correlation among the three primary color component values. This correlation arises by virtue of the fact that any arbitrary color can be essentially derived by a specified linear combination of the three primary color component values. Any given color corresponds to a specific unique wavelength value within the visible range (i.e., approximately 400-700 nanometers). Thus, within this range, the primary color component values as well as any appropriate derivative thereof (e.g. the corresponding "gamma corrected" normalized color component values, chromaticity values or normalized tristimulus values, etc.) bear a pre-specified ratio to one another corresponding to a unique wavelength value. It will be noted that for purposes of the present invention the term "normalized tristimulus value(s)" is used as synonymous to the chromaticity coordinates and the distribution coefficients. However, it will be understood by those familiar with the art that the primary color component or transformed (non-physical) primary color component values are sometimes referred to as tristimulus values. See W.T. Wintringham, "Color Television and Colorimetry", Proceedings IRE, Vol. 39, October, 1951, pp. 1135-1172; Television Technology Today, Ed. T.S. Rzeszewski, IEEE Press, IEEE, New York, 1985, pp. 215-250; Television Engineering Handbook, Ed. K.B. Benson, McGraw Hill Book Co., New York, 1986.

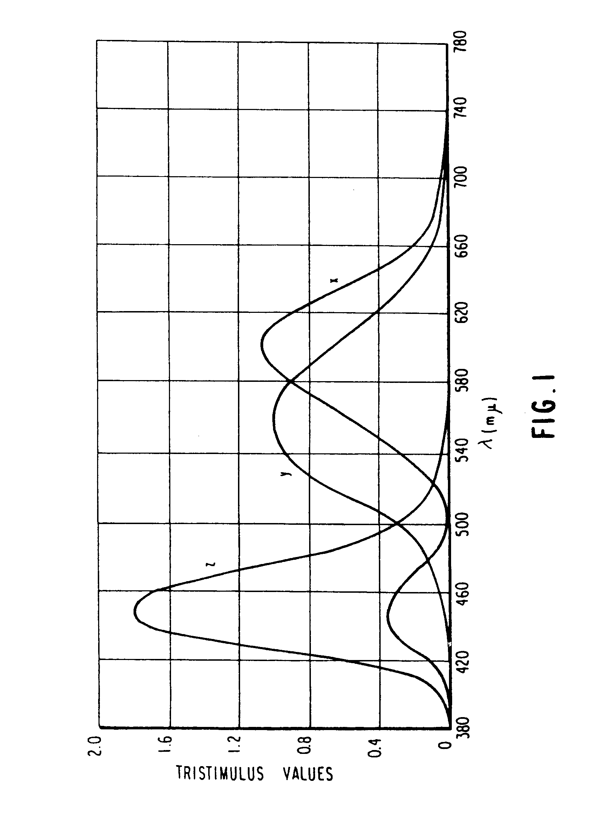

An example of the above mentioned correlation is illustrated in Figure 1 which plots normalized tristimulus values against wavelength values over the visible range. See J.O. Limb, C.B. Rubinstein and J.E. Thompson, "Digital Coding of Color Video Signals - A Review", IEEE Trans. Commun., Vol. COM-25, November 1977, pp. 1349-1384; W.T. Wintringham, "Color Television and Colorimetry", Proceedings IRE, Vol. 39, October, 1951, pp. 1135-1172; Television Engineering Handbook, Ed. K.B. Benson, McGraw Hill Book Co., New York, 1986. Although for purposes of the present invention the wavelength is conveniently taken as the independent variable, it will be recognized by those skilled in the art that interconversions between the frequency and wavelength may be made if desired.

For any arbitrary wavelength, therefore, the relative proportions of the corresponding primary color component values or derivatives thereof can be determined. By utilizing these interrelations, the wavelength value plus one additional parameter may be utilized to characterize the state of the color stimulus of any given pel. The only additional parameter required to completely specify the value of each of the three primary color components for a given pel is the actual value of any one of the primary color component values or, alternatively, any unnormalized combination thereof (e.g. the corresponding luminance or chrominance value).

Therefore, each sampled pel may be described, for example, by transmitting the luminance value together with the wavelength value to which the primary color component values correspond. At the receive side of the transmission, the appropriate primary color component values can be regenerated.

This approach will allow color video signals to be transmitted at a reduced bit rate of for instance 16 (i.e. 2x8) bits per second or less for each sample pel, depending on the resolution required. For example,

3

any wavelength value within the visible spectrum (approximately 300 nanometers) could be represented with 6 or 7 bits with adequate resolution, thus allowing the number of bits per sample pel to be reduced from 24 to 14 or 15.

It will also be recognized that additional bit rate reduction may be achieved by making use of correlations among the wavelength and luminance values of the spatially and/or temporally adjacent or consecutive pels within any group. Such reductions can be accomplished using any of a number of algorithms which are well known in the art to identify and handle the spatial and temporal homogeneity, continuity and symmetry involved. Perhaps simplest among such correlations are spatial uniformity where the same wavelength and luminance values exist for adjacent pels forming a subset within a group, and temporal stationarity where the same wavelength and luminance values exist for the given pel(s) for a set of consecutive frames. It will also be recognized that DPCM, DCT, MCT and other conventional bit rate reduction techniques can be utilized in conjunction with the present invention to achieve even greater bit rate reduction.

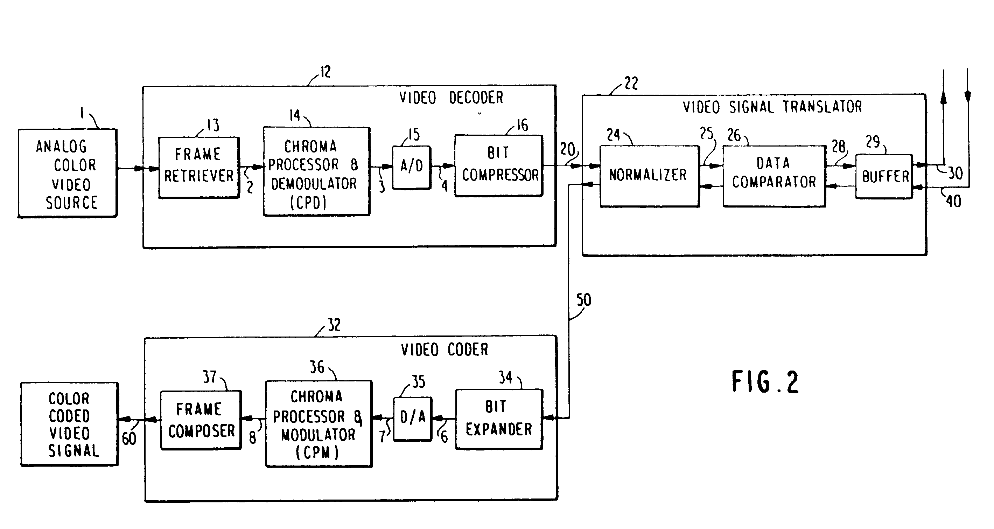

The present invention will now be described with reference to Figure 2 wherein an analog color video signal 1, consisting of the unique luminance and two chrominance component values for each pel of color video signal 1, is input into decoder 12 which transforms the two chrominance component values into the corresponding three primary color component values and outputs the decoded signal 20 consisting of the unique luminance value and three primary color component values for each sampled pel. The decoded signal 20 is input into the video signal translator 22 which transforms the primary color component values contained in the decoded signal 20 into the corresponding unique wavelength value and produces translated signal 30, consisting of the unique luminance and wavelength value, which is transmitted in the conventional manner over the transmission channel.

The video decoder 12 includes a frame retriever 13 which extracts each picture frame, on a frame-by-frame basis, from the color video signal 1. The chroma processor and demodulator (CPD) 14 (See Encyclopedia of Integrated Circuits, by W.H. Buchsbaum, Prentice-Hall, Inc. Englewood Cliffs, New Jersey, 1981) receives the frame retriever output signal 2 and performs the desired sampling of the pels and transforms the chrominance values into the corresponding three primary color component values for each sampled pel within a given picture frame. The exact form of the related transformation(s) depends on the type of color video signal (e.g. NTSC, PAL, SECAM, etc.) but can be easily derived for any specified type and normalization conventions adopted.

The CPD output signal 3 is then converted from analog to digital in the analog-to-digital converter 15. The digitised CPD output signal 4 is compressed using conventional bit rate reduction techniques (e.g. DPCM, DCT, MCT, etc.) in bit compressor 16 before being output from the video decoder 12.

In the video signal translator 22, the decoded signal 20 is input into the normalizer 24 which transforms the primary color component values into the corresponding normalized tristimulus values for each sampled pel. See Television Engineering Handbook, Ed. K.B. Benson, McGraw Hill Book Co., New York, 1986. The normalized signal 25, consisting of the unique luminance value and normalized tristimulus values for each sampled pel, is then input into data comparator 26 wherein the unique wavelength value corresponding to the normalized tristimulus values for each sampled pel is determined. The data comparator output signal 28, consisting of the unique luminance and wavelength values for each sampled pel, is then stored in the buffer 29 before being transmitted over the transmission channel 30.

Several alternative approaches can be utilized to determine the unique wavelength corresponding to the primary color component values.

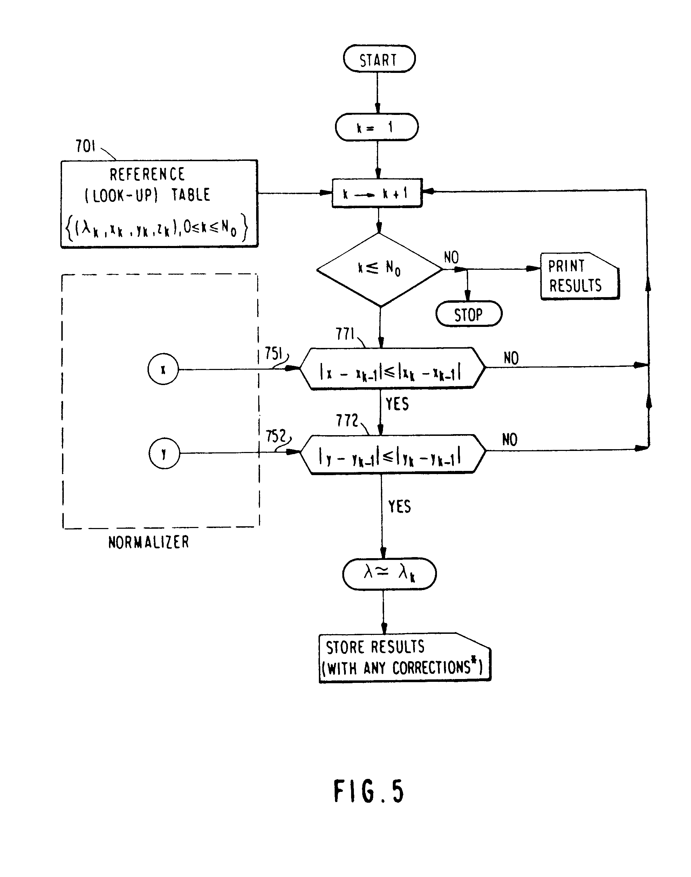

One approach is to utilize a data comparator containing (i) a reference data base consisting of discrete values of the wavelength within the range of interest and having the desired degree of resolution and accuracy, and the corresponding normalized tristimulus values and (ii) a simple comparator circuit for conversions between the normalized tristimulus values and the corresponding wavelength value. The data comparator would be required at both the transmit and receive sides of the transmission channel (e.g., at the uplink and downlink earth stations in a communications satellite network). A logical sequence can be used to determine the applicable wavelength value for any given normalized tristimulus values (x, y and z) by matching the given tristimulus values with the appropriate indexed normalized tristimulus values stored in the reference data base. Any anomalous behavior at or near the peak of the relevant curves may be eliminated by selecting each peak point as an indexed entry in the reference data base. A diagrammatical representation of a suitable logical sequence is shown in Figure 5.

Figure 5 represents a flow chart diagram of the logic employed in the data comparator for the determination of the unique wavelength value ($\lambda$) corresponding to the normalized tristimulus values (x, y, z). For this purpose, the x normalized tristimulus value 751 is input into the logic element 771 of the data comparator and, starting with the second lowest index k value (i.e. k = 2), the indexed normalized

tristimulus values $x_k$ and $x_{k-1}$ for the indexed wavelength values $\lambda_k$ and $\lambda_{k-1}$, respectively, are input from the reference data base 701 into logic element 771. For each indexed entry from the reference data base 701 the following comparison is made

$$| x - x_{k-1} | \leq | x_k - x_{k-1} | \qquad (1)$$

If the outcome of the above comparison in the logic element 771 is affirmative, ("yes"), then an analogous comparison for the y normalized tristimulus value is performed in the logic element 772 starting with the index k value at which the outcome of the comparison in logic element 771 is affirmative. The value of the unique wavelength will fall within the interval $(\lambda_{k-1},\lambda_k)$, for the index k value at which the outcome of the comparison in both logic element 771 and logic element 772 are affirmative. The value $\lambda = \lambda_k$ can be used as a first approximation and the mean of the three values, determined using simple interpolations, within the interval $(\lambda_{k-1}, \lambda_k)$ with respect to the three given normalized tristimulus values (x, y, z) can be taken as the unique wavelength value $\lambda$ for the pel in question. Although the data comparator may constitute the simplest approach for determining the unique wavelength corresponding to the normalized tristimulus values and vice versa, it will obviously entail some degree of quantization error depending on the total number of entries utilized. In general, the resolution and accuracy should be satisfactory if the entire visible spectrum is divided into about 30000 discrete points (i.e., if the reference data base contains 30000 values for each of the normalized tristimulus values at roughly $10^{-2}$ nanometers apart on the wavelength scale).

A graphical approach may alternatively be utilized to determine the unique wavelength corresponding to the given normalized tristimulus values. Using this approach, the graphs of the normalized tristimulus values versus wavelength (Figure 1) can be stored in an appropriate circuit or computing device, with interactive graphics capabilities. Using the ordinates for the given normalized tristimulus values to determine the points of intersections with the corresponding curves, the abscissae of the points of intersection will yield the applicable wavelength value. The three ordinate values, one from the intersection of each of the three curves, will yield approximately the same wavelength value, thereby removing any ambiguities resulting from the bell-shaped variation pattern of the curves involved.

A still further approach is to utilize an algebraic solution to determine the unique wavelength value corresponding to the applicable normalized tristimulus values. In this approach, an application sensitive integrated circuit, or application specific software can be used to analytically compute the wavelength value corresponding to a given set of normalized tristimulus values (or visa-versa). Letting the normalized tristimulus values (x, y, z) be represented by the known functions $F_1$, $F_2$, and $F_3$, respectively, of the wavelength ($\lambda$) yields:

$$x = F_1 (\lambda) \qquad (2.a)$$

$$y = F_2 (\lambda) \qquad (2.b)$$

$$z = F_3 (\lambda) \qquad (2.c)$$

or conversely, using $F^{-1}_1$, $F^{-1}_2$, and $F^{-1}_3$, to represent the inverse functions:

$$\lambda = F_1^{-1} (x) = F_2^{-1} (y) = F_3^{-1} (z) \qquad (2.d)$$

The functions $F_1$, $F_2$ and $F_3$ correspond to the curves illustrated in Figure 1. Accurate closed-form representations of $F_1$, $F_2$, and $F_3$ are easily obtainable through a suitable numerical curve-fitting procedure. For example, as Gaussian variation patterns are suggested by the bell-shapes of the three curves in Figure 1 (with perhaps a small skewness, and also a secondary peak in the case of the z-vs-$\lambda$ curve), the following type of analytical representations may be appropriately 'fitted' to these curves:

$$F_1(\lambda) = \frac{x_o}{\sqrt{2\pi}\ \sigma_x}\ \exp\left[-\frac{(\lambda-\lambda_x)^2}{2\sigma^2_x}\right] \qquad (3.a)$$

$$F_2(\lambda) = \frac{Y_o}{\sqrt{2\pi}\ \sigma_y}\ \exp\left[-\frac{(\lambda-\lambda_y)^2}{2\sigma^2_y}\right] \qquad (3.b)$$

$$F_3(\lambda) = \frac{z_o}{\sqrt{2\pi}\ \sigma_z}\ \exp\left[-\frac{(\lambda-\lambda_z)^2}{2\sigma^2_z}\right]$$

$$+ \frac{z'_o}{\sqrt{2\pi}\ \sigma'_z}\ \exp\left[-\frac{(\lambda-\lambda'_z)^2}{2\sigma'^2_z}\right] \qquad (3.c)$$

Here $\lambda_x$ in Equation (3.a) is the wavelength value at which the peak x normalized tristimulus value occurs, the peak value being $x_o/\sqrt{2\pi}\ \sigma_x$, where $\sigma_x$ represents the dispersion or standard deviation of the x- vs- $\lambda$ curve. The primed variables in Equation (3.c) correspond to the secondary peak in the z-vs-$\lambda$ curve. Each specified wavelength value yields a unique set of normalized tristimulus values. However, due to the nonlinear (Gaussian) variations involved, the inverse relationship of the normalized tristimulus values with respect to the wavelength value can only be determined by comparison of the sets of solutions of each of Equations (3.a) and (3.b). To illustrate this point, it will be noted that for any given normalized tristimulus values, Equation (3 a) can be solved to obtain a pair of solutions:

$$\lambda = \lambda_x \pm \sigma_x \left[2\ell n\left\{\frac{x_o}{\sqrt{2\pi}\ \sigma_x\ x}\right\}\right]^{\frac{1}{2}} \qquad (4.a)$$

The ambiguity implicit in Equation (4.a) is resolved by noting that Equation (3.b) yields an analogous pair of solutions:

$$\lambda = \lambda_y \pm \sigma_y \left[2\ell n\left\{\frac{Y_o}{\sqrt{2\pi}\ \sigma_y\ y}\right\}\right]^{\frac{1}{2}} \qquad (4.b)$$

For a given set of normalized tristimulus values only one of the two solutions of Equation (4.a) will coincide

6

with one of the two solutions of Equation (4.b), the common solution being the correct wavelength value. A further solution coinciding with the common solution of equations (4.a) and (4.b) may also be obtained from Equation (3.c). In practice, a small amount of inaccuracy may arise due to, for example, curve-fitting errors. By taking the mean value of the common solutions derived from equations (4.a) and (4.b) suitable accuracy can normally be obtained. Alternative analytical representations, well known to those skilled in the art, can also be utilized to determine the unique wavelength value corresponding to the given normalized tristimulus values if greater accuracy is required or for convenience.

Referring again to Figure 2, in the receive mode the transmitted digital color video signal 40, consisting of the unique luminance and wavelength values for each sampled pel, is received by the video signal translator 22 and subjected to reverse processing using inverse transformations. The resulting translated signal 50, consisting of the unique luminance and primary color component values, is input into the video coder 32 wherein the coded color video signal 60, consisting of the unique luminance and two chrominance values for each pel to be displayed, is regenerated and may now be displayed utilizing conventional techniques and equipment.

In the video coder 32, the translated signal 50 is expanded in bit expander 34 using conventional techniques. The resulting expander output signal 6 is converted from digital to analog in the digital-to-analog converter 35. The chroma processor and modulator (CPM) 36 transforms the primary color component values contained in the output signal 7 into the corresponding chrominance component values for each pel and the CPM output signal 8, consisting of the unique luminance and two chrominance component values is input into the frame composer 37. The picture frames of the color video signal 60 to be displayed are then recompiled in the frame composer 37 from the CPM output signal 8.

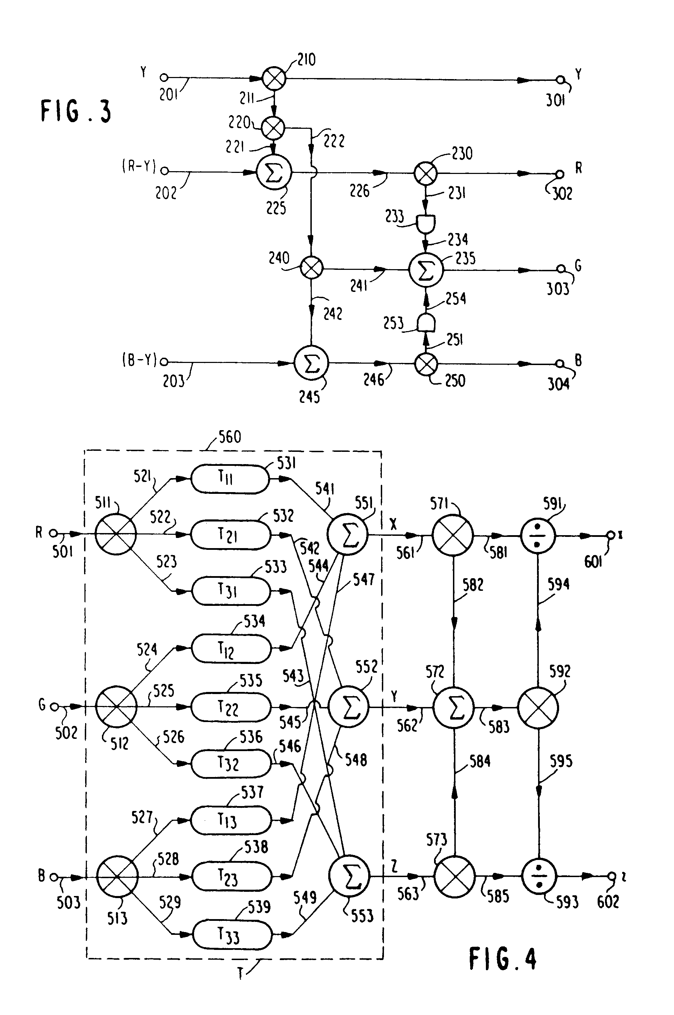

Figure 3 provides an illustrative functional representation of the circuit logic that could be used in the chroma processor and modulator (CPM) as shown in Figure 2. The original luminance signal 201 is fed into the signal doubler and splitter (SDS) 210. The SDS 210 doubles the input signal 201 and splits the resultant signal into two equal component signals, each identical in amplitude as well as phase to the input signal 201. One of the two component signals is output as the original luminance signal at the output port 301. The other component signal 211 is input into the SDS 220 which replicates the input signal 211 into two identical component signals 221 and 222, each identical in amplitude and phase to input signal 211. The first chrominance signal (R-Y) 202 is mixed with the component signal 221 in the mixer 225, which performs a signal summation function. The mixer output signal 226 is the primary color component (R). Signal 226 is fed into SDS 230 which performs a similar replicating function as described above on signal 226. One component output signal of the SDS 230 is output as the primary color component (R) at the output port 302. The other output component signal 231 is fed into the signal invertor 233 which produces a signal equal in amplitude but opposite in sign to signal 231. The invertor output signal 234 is denoted as (-R) and is fed into the mixer 235. The component signal 222 is fed into the SDS 240, which produces two identical component signals 241 and 242, each equal to the original luminance signal 201. The component signal 241 is fed into the mixer 235, and the component signal 242 is input into the mixer 245. The mixer 245 also receives the second chrominance signal (B-Y) 203, and performs a summation function to produce output signal 246 which is the primary color component (B). Signal 246 is fed into the SDS 250 where it is replicated into two identical component output signals each equal to signal 246. One component output signal of the SDS 250 is output as the primary color component (B) at the output port 304. The other component output signal 251 is fed into the signal invertor 253 which produces a signal equal in amplitude but opposite in sign to signal 251. The invertor output signal 254 is denoted as (-B) and is fed into the mixer 235 which performs a summation function on signals 234, 241 and 254. The output signal from the mixer 235 is the remaining primary color component (G) and is provided at the output port 303.

Figure 4 presents an illustrative functional representation of the logic used to determine the normalized tristimulus values (x, y, z) from the primary color components (R, G, B) in the normalizer shown in Figure 2. The primary color component values 501, 502, and 503, respectively, are transformed into the (nonphysical) primary color component values (X, Y, Z) by means of the transducer assembly 560 which consists of the signal treblers and splitters (STS) 511, 512 and 513, a series of transducer elements 531 thru 539, and the mixers 551, 552 and 553. For example, primary color component signal R 501 is fed into the STS 511 to derive three STS output component signals 521, 522 and 523 each of which is identical to signal 501. The output component signal 521 is multiplied by a numerical factor equal to $T_{11}$ in the transducer element 531 and the product signal 541 is fed into the mixer 551. The remaining input and output sequences within the transducer assembly 560 are similar. The output of the mixers 551, 552 and 553 are the transformed primary color component signals 561, 562, and 563, respectively. The component signal X 561 is input into the SDS 571 to derive two replicas of component signal 561, i.e. SDS output signals 581 and 582, respectively. Similarly, the component signal 563 is input into the SDS 573 to generate two replicas of component signal 563, which are SDS output signals 584 and 585. The SDS output signals 582 and 584 are combined with the transformed primary color component signal Y 562 in the mixer 572 which performs a signal summation of all its input signals. The mixer output signal 583 is then replicated in the SDS 592 such that two equal summed values of the transformed primary color component values $(X + Y + Z)$ are produced and output as SDS output signals 594 and 595. The ratio of output signal 581 to the output signal 594 is derived in the divider 591. The output of divider 591 is the normalized tristimulus value (x) corresponding to primary color component (R) and is execrated at the output port 601. Likewise, the output of the divider 593 yields the normalized tristimulus value (z) corresponding to primary color component (B) which is output at the output port 602. As the three normalized tristimulus values satisfy the relation:

$$x + y + z = 1 \qquad (5)$$

the remaining normalized tristimulus value (y) corresponding to the primary color component (G) is easily obtainable.

**Claims**

1. A method of transmitting a color video signal, comprising the steps of:
   generating a first signal representing the wavelength of a picture element of said color video signal;
   generating a second signal representing at least one primary color component of the picture element; and
   transmitting said first and second signals.

2. A method as recited in claim 1, wherein said at least one primary color component is a single parameter corresponding to an unnormalized combination of primary color components of the picture element, and wherein said unnormalized combination of primary color components is luminance.

3. A method as recited in claim 1, wherein said step of generating a first signal comprises:
   generating normalized tristimulus values corresponding to primary color components of the picture element; and
   transforming the normalized tristimulus values into the corresponding wavelength.

4. A method of receiving a color video signal, comprising the steps of:
   receiving a first signal representing the wavelength of a picture element of said color video signal;
   receiving a second signal representing at least one primary color component of the picture element; and
   generating the color video signal in accordance with said first and second signal.

5. A method as recited in claim 4, wherein said at least one primary color component is a single parameter corresponding to an unnormalized combination of primary color components of the picture element, and wherein the unnormalized combination of primary color components is luminance.

6. A method as recited in claim 4, further comprising the step of:
   translating the first signal into two corresponding chrominance values by:
   transforming the wavelength into corresponding primary color components of the picture element; and
   further transforming the primary color components into the two corresponding chrominance values.

7. An apparatus for transmitting a color video signal, comprising:
   generating means for generating a first signal representing the wavelength of a picture element of said color video signal and for generating a second signal representing at least one primary color component of said picture element;
   means for transmitting said first and second signals.

8. An apparatus as recited in claim 7, wherein said at least one primary color component is a single parameter corresponding to an unnormalized combination of primary color components of the picture element, and wherein said unnormalized combination of the primary color components is luminance.

**9.** An apparatus as recited in claim 7, wherein said generating means comprises translating means for receiving at least three signals representing said picture element and for transforming said at least three signals into said first and second signals.

**10.** An apparatus as recited in claim 9, wherein said at least three signals comprise a luminance signal and first and second chrominance signals.

**11.** An apparatus as recited in claim 9, wherein said generating means further comprises means for generating a further signal set comprising a luminance signal and a plurality of signals each representing a respective primary color component of said picture element, and wherein each signal of said plurality of signals comprises a normalized tristimulus value corresponding to a respective primary color component.

**12.** An apparatus as recited in claim 11, wherein said generating means further comprises means responsive to said plurality of signals for generating said first signal.

**13.** An apparatus for receiving a color video signal, comprising:
receiving means for receiving a first signal representing the wavelength of a picture element of said color video signal and for receiving a second signal representing at least one primary color component of said picture element; and
translating means for transforming said first and second signals into at least three signals representing said picture element.

**14.** An apparatus as recited in claim 13, wherein said at least one primary color component is a single parameter corresponding to an unnormalized combination of primary color components of the picture element, and wherein said unnormalized combination of primary color components is luminance.

**15.** An apparatus as recited in claim 13, wherein said at least three signals comprise a luminance signal and first and second chrominance signals.

**16.** An apparatus as recited in claim 13, wherein said translating means comprises means for transforming said first and second signals into a further signal set comprising a luminance signal and a plurality of signals each representing a respective primary color component of said picture element, and
wherein each signal of said plurality of signals comprises a normalized tristimulus value corresponding to a respective primary color component.

**17.** An apparatus as recited in claim 11 or claim 16, wherein the translating means further comprises a data comparator (i) for storing a reference data base consisting of discrete values of wavelength within the visible range and corresponding normalized tristimulus values and (ii) for selecting normalized tristimulus values corresponding to a given wavelength value or a wavelength value corresponding to a given set of normalized tristimulus values.

**18.** An apparatus as recited in claim 11 or claim 16, wherein the translating means further comprises a graph simulator (i) for storing the graphs of wavelength values in the visible range versus corresponding normalized tristimulus values and (ii) for selecting the normalized tristimulus values corresponding to a given wavelength value or a wavelength value corresponding to a given set of normalized tristimulus values.

**19.** An apparatus as recited in claim 11 or claim 16, wherein the translating means further comprises a computing device for analytically calculating normalized tristimulus values corresponding to a given wavelength value or a wavelength value corresponding to a given set of normalized tristimulus values.

FIG. 1

FIG.2

FIG.3

FIG.4

START

k = 1

701

REFERENCE
(LOOK-UP) TABLE

$\left\{ (\lambda_k, x_k, y_k, z_k), 0 \leq k \leq N_0 \right\}$

$k \longrightarrow k + 1$

$k \leq N_0$

NO

PRINT
RESULTS

STOP

771

751

$x$

$|x - x_{k-1}| \leq |x_k - x_{k-1}|$

NO

YES

772

752

$y$

$|y - y_{k-1}| \leq |y_k - y_{k-1}|$

NO

YES

NORMALIZER

$\lambda \simeq \lambda_k$

STORE RESULTS
(WITH ANY CORRECTIONS[*])

FIG.5

13